# EUROPEAN PATENT SPECIFICATION

(11) **EP 0 797 596 B1**
(45) Date of publication and mention of the grant of the patent: **03.03.1999**
(21) Application number: 95904845.5
(22) Date of filing: 08.12.1994
(51) Int. Cl.: C08F 10/00, C08F 4/618

(54) **CATALYST FOR POLYMERIZING OLEFINS**
OLEFINPOLYMERISATIONSKATALYSATOR
CATALYSEUR POUR LA POLYMERISATION D'OLEFINES

(30) Priority: 16.12.1993 US 168830
(43) Date of publication of application: 01.10.1997
(73) Proprietor: EXXON CHEMICAL PATENTS INC., Linden New Jersey 07036 (US)
(72) Inventor: SPECA, Anthony, Nicholas, Kingwood, TX 77345 (US)
(74) Representative: Dew, Melvyn John
(86) International application number: US9414099
(87) International publication number: WO9516714

(56) References cited:
- EP-A- 0 356 183
- EP-A- 0 463 672
- EP-A- 0 480 435
- EP-A- 0 500 392

## Description

### BACKGROUND

### Technical Field

This invention relates generally to a catalyst system of the Ziegler-Natta type for polymerizing 1-olefins, both homo-polymerizations and co-polymerizations. More specifically this invention relates to the use of magnesium chloride in such catalyst system for the purpose of diminishing the "comonomer effect", i.e. polymerizations where reduction of comonomer into such polymerizations diminishes the activity of the catalyst.

### Related Art

In the polymerization of 1-olefins to produce polyethylene, polypropylene, and copolymers of ethylene with propylene, or higher α-olefins, considerable effort has been expended to improve catalyst productivity. Particularly in the production of high density polyethylene and linear low density polyethylene, productivity is impacted by a phenomenon that has come to be known as the "comonomer effect". The "comonomer effect" can be described in that catalysts well known in the art, such as those described in U. S. Patent 5,064,798, suffer from decreasing catalyst productivity as the resin density of the product is increased, that is, as the percentage of alpha-olefin in the reactor, in relation to ethylene, is decreased. When homo-polymerization is attempted with such catalysts, the catalyst productivity goes down dramatically.

EPA 0 500 392 A2 suggests preparation of a polyolefin using a catalyst comprising solid catalyst component and an organometallic compound. The solid catalyst component is prepared by reacting:
(1) a silicon dioxide and/or aluminum oxide;
(2) a reaction product of a magnesium halide and a compound [Me(OR)ₙX_{z-n}] (Me is an element of Groups I to IV); and
(3) a titanium compound (Ti (OR'ₘX₄₋ₘ) in the presence of a compound R²OH where R² is a hydrocarbon radical, an organoaluminum compound and a silicon compound.

Chen and Ray document numerous literature references that show rate enhancement due to the "comonomer effect", e.g., increasing comonomer changes (increases) the rate of ethylene polymerization. Chen and Ray, Polymerization of Olefin Through Heterogeneous Catalysis Xl; "Gas Phase Sequential Polymerization Kinetics", *Journal of Applied Polymer Science* 49, 1573, (1993); John Wiley & Sons, Inc..

In the art, it is well known to use finely divided porous inorganic oxides, such as silica or silica-alumina as catalyst supports. Preparation of ethylene polymerization catalysts are known by combining alkylaluminum halide treated particulate silica with magnesium chloride and titanium chloride dissolved in an ether as an electron donor solvent, followed by drying the mixture, then slurrying the dried mixture with a hydrocarbon solvent and reacting the slurried mixture with a boron halide. This is followed by another drying step and then treatment with an aluminum alkylhalide. Magnesium diethyloxide is a substitute for the magnesium chloride. Esters of aliphatic and aromatic carboxylic acids are suitable electron donors.

In other examples catalysts have been prepared by impregnating finely divided porous silicon dioxide with an aluminum alkyl or aluminumalkylhalide in a hydrocarbon solvent. After removing the solvent the solid phase is combined sequentially with a magnesium compound and then a titanium alkoxy-halide or titanium tetrahalide, all in suitable solvents and with intermediate solid recovery. Listed among suitable magnesium compounds are magnesium dihydrocarbyloxides.

In other catalyst syntheses the support is prepared insitu with a precipitating agent. Organic acid halides, including benzoyl chloride, have been mentioned for use as precipitating agents or as electron donors, and chlorosilanes have been reacted with organomagnesium compounds to form a solid. Also known is the preparation of 1-olefin polymerization catalysts by a method which includes using aluminum alkyls or aluminum alkylhalides as a precipitating agent for a hydrocarbon solution of a titanium alkoxide and a magnesium alkoxide.

Preparation of 1-olefin-polymerization catalysts has been taught by reacting a chlorosilane and an organomagnesium compound (the latter containing a small amount of trialkylaluminum to improve solubility), then combining the solid product first with an electron donor ester of a nitrogen- or sulfur-containing heterocyclic acid or an ester of a hydrocarbylcarboxylic acid, followed next by a titanium compound, and in some instances a titanium alkoxide. Optionally, the organomagnesium compound may be treated with an electron donor (halides and esters of hydrocarbylcarboxylic acids are mentioned) before reacting the product of that treatment with a chlorosilane. The chlorosilane reaction with either the treated or untreated organomagnesium compound may be conducted in the presence of a silica or silica-alumina support.

### SUMMARY

The catalysts, their preparation, and polymerization of 1-olefins is provided herein by a new supported catalyst composition. The catalyst is comprised of two components. The first catalyst component is formed by reacting a halogen-containing compound of the formula:

HₐM¹X¹ _{b}R¹ _{(c-b-a)} (Formula III)

wherein
M¹ is boron, carbon, silicon or mixtures thereof;
X¹ is Cl, Br or mixtures thereof;
R¹ is a hydrocarbyl or alkoxy radical having 1 to 20 carbon atoms;
"a" is zero when M¹ is boron, and greater than 1 when M¹ is silicon or carbon; and
"b" is a number equal or greater than one when M¹ is boron, and greater than one when M¹ is silicon or carbon; and
"c" is the maximum valency of the element M¹;
with a mixture produced by contacting a finely divided porous inorganic oxide support in an inert solvent with a solution made by combining an inert solvent, magnesium chloride (MgCl₂), and magnesium dihydrocarbyloxide of the formula:

Mg(OR²)₂ (Fomula I)

wherein;
R² is the same or different and is a hydrocarbyl radical containing 6 or more carbon atoms,
with a transition metal hydrocarbyloxide of the formula:

M²(OR³)_{y} (Formula II)

wherein
M² is a transition metal from Group IVB, VB, and VIB of the Periodic Table;
"y" is the valency of the metal M²; and
R³ is the same or different and is a hydrocarbyl radical containing 1 to 20 carbon atoms.

The second catalyst component of the new catalyst compositions is an organometal compound of the formula:

M³R⁴ _{e-f}X_{f} (Formula IV)

wherein
M³ is aluminum, magnesium, zinc or mixtures thereof;
R⁴ is a saturated hydrocarbyl radical having from 1 to 14 carbon atoms;
X is hydrogen, halogen or an alkoxy having from 1 to 14 carbon atoms;
"e" is the valency of the metal M³; and
"f" is the number from zero to e-1.

In a preferred embodiment, the solution is made by dissolving the magnesium chloride in a solution of the inert solvent with the magnesium dihydrocarbyloxide and the transition metal hydrocarbyloxide. The solution is reacted with a carboxylic acid derivative, such as a halide or an ester, and the soluble reaction product is then combined with the porous inorganic oxide support in an inert solvent before reacting with the halogen-containing compound. The carboxylic acid derivative so used is one of the formula

R⁵COZ, (Formula V)

wherein
R⁵ is a hydrocarbyl radical having from 1 to 20 carbon atoms, and
Z is a halogen atom or an alkoxy radical having from 1 to 20 carbon atoms.

In another embodiment, the magnesium dihydrocarbyloxide and magnesium chloride are employed without the carboxylic acid derivative for the preparation of the catalyst composition.

An important characteristic of the present catalyst system is that the new catalyst compositions give significantly higher reactivities in ethylene homo-polymerization, that is, they do not exhibit the "comonomer effect", specifically they achieve high productivity, even in the substantial absence of an alpha-olefin comonomer.

Another important characteristic of the catalyst compostions prepared according to this invention is that the process of preparation may be conducted without intermediate drying and separation steps. This is significant because the number of drying steps is an important cost factor which can be determinate in whether a catalyst compostion is commercially viable.

### DESCRIPTION

Each of the component materials and the reaction conditions employed for the preparation of the catalyst are now described in detail.

Magnesium dihydrocarbyloxide compositions which are used in preparing the first mentioned catalyst component are of the formula:

Mg(OR²)₂ (Formula I)

wherein R² is the same or different and is a hydrocarbyl radical containing one or more carbon atoms. Examples of hydrocarbyl radicals are from groups induding alkyl groups such as methyl, ethyl, propyl, butyl, pentyl, hexyl and decyl groups; cycloalkyl groups such as the cyclohexyl group, aryl groups such as the phenyl groups and combination groups such as alkylaryl groups, arylalkyl groups, for example and toluyl groups, and alkylcycloalkyl groups. Of these groups, alkyl groups are preferred and more preferably, alkyl groups in which the carbon number is 6 or greater.

Especially suitable are magnesium dialkoxides such as magnesium di-hexyloxide, and magnesium di-2-ethylhexyloxide. Other suitable examples include magnesium dieicosyloxide, magnesium dicyclohexyloxide, magnesium diphenoxide, and magnesium dibenzyloxide.

Magnesium chloride (MgCl₂) is either flake or granule and should be anhydrous.

In the transition metal hydrocarbyloxide of the formula:

M²(OR³)_{y} (Formula II)

M² is a transition metal selected from the Group IVB, VB, VIB of the Periodic Table,
"y" is the maximum valency of the metal M²;
R³ is the same or different and is a hydrocarbyl radical containing 1 to 20 carbon atoms.

The transition metal M² suitably is titanium, vanadium, zirconium or chromium. Excellent results are obtained with titanium compounds and they are preferred. Some of the transition metal compounds suitable for use in the invention include, for example, titanium tetrahydrocarbyloxides, zirconium tetrahydrocarbyloxides.

The titanium tetrahydrocarbyloxides are the preferred titanium compounds because they produce excellent results and are readily available. Suitable titanium tetrahydrocarbyloxide compounds include those expressed by the general formula Ti(OR²)₄, wherein each R² is the same as defined above and is individually selected from an alkyl, cycloalkyl, aryl, alkylaryl, and arylalkyl hydrocarbon radical containing from 1 to 20 carbon atoms per radical, each of which can be the same or different Titanium tetrahydrocarbyloxides in which the hydrocarbyl group contains from 1 to 10 carbon atoms per radical are most often employed because they are more readily available. Suitable titanium tetrahydrocarbyloxides can be found in U. S. Patent number 5,064,798.

Of the titanium tetrahydrocarbyloxides, titanium tetraalkoxides are generally preferred, and titanium tetraisobutoxide or tetrabutyloxide are particularly preferred because of the excellent results obtained employing this material and its general availability at a reasonable cost.

The molar ratio of magnesium compounds to the transition metal compound can be selected over a relatively broad range. Generally, the molar ratio is within the range of 0.1 to 100, however, the most common molar ratios are within the range of 0.5 to 50. When titanium tetrahydrocarbyloxide and magnesium compounds are employed to form a composition of matter of the invention, a molar ratio of magnesium to titanium of 0.5 to 50 is especially suitable.

In accordance with the invention, the magnesium dihydrocarbyloxide, the magnesium chloride and the transition metal hydrocarbyloxide are brought together in an inert solvent essentially free of water under a dry oxygen-free nitrogen atmosphere. The term "inert" means that the solvent does not chemically react with the component dissolved or mixed in the solvent or with products formed in the solvent. Such solvents include hexane, heptane, cyclohexane, methylcyclohexane, toluene, xylenes, and benzene. The magnesium chloride, the magnesium hydrocarbyloxide, and the transition metal hydrocarbyloxide suitably may be brought together by mixing the transition metal hydrocarbyloxide and the magnesium hydrocarbyloxide with a slurry of the magnesium chloride and adding solvent followed by heating, or by dissolving the magnesium dihydrocarbyloxide and the magnesium chloride in the inert solvent and then adding the transition metal hydrocarbyloxide in liquid form to that solution. Generally, the amount of solvent used is within a broad range, suitably from 5 to 100 ml per gram of magnesium compounds. The dissolution suitably is at room temperature without supplemental heating or cooling, but heating or cooling can be within a broad range from 15°C to the boiling point of the solvent.

As an aspect of my invention, and as an alternative to the foregoing methods for combining the magnesium dihydrocarbyloxide, magnesium chloride and the transition metal hydrocarbyloxide, the magnesium dihydrocarbyloxide is produced in situ in the inert solvent, and the transition metal hydrocarbyloxide and magnesium chloride are then combined. with the magnesium dihydrocarbyloxide so produced. In this latter aspect, a magnesium dihydrocarbyl compound, suitably a magnesium dialkyl compound, for example, ethyl butyl magnesium, in an inert solvent, suitably heptane, is reacted with two mol equivalents of a hydrocarbyl alcohol, suitably an alkyl alcohol, preferably an alkyl alcohol in which the hydrocarbyl group has six or more carbon atoms, for example, 2-ethylhexanol. Since heat is evolved, the hydrocarbylalcohol is added to the dissolved magnesium hydrocarbyl compound at a rate to maintain a desired temperature range sufficiently slow to maintain a temperature below the boiling point of the mixture.

The solution of dissolved magnesium dihydrocarbyloxide, magnesium chloride, and transition metal hydrocarbyloxide is combined with a finely divided porous inorganic oxide support material, suitably a finely divided particulate silica or silica composite such as silica-aluminum. Suitable oxides have diameters and pore sizes well known by those of skill in the art and described in U. S. Patent number 5,064,798. A suitable silica support is microspheroidal Davison 948 silica gel available from W. R. Grace.

The support material is substantially dry when used. Drying is accomplished by heating for several hours at a temperature of 500° C. The porous oxide support and the solution of dissolved magnesium dihydrocarbyloxide, magnesium chloride and transition metal hydrocarbyloxide may be combined by adding that solution to a slurry of the oxide support in an inert solvent for the magnesium dihydrocarbyloxide, magnesium chloride and the transition metal hydrocarbyloxide, or the support may be added to a solution of the magnesium dihydrocarbyloxide, magnesium chloride, and transition metal hydrocarbyloxide in an inert solvent.

Suitably, 1 to 10,000 parts by weight of the oxide support to weight of the transition metal are employed.

The oxide support is allowed to remain in the inert solvent in contact with the dissolved titanium metal hydrocarbyloxides, magnesium chloride and magnesium dihydrocarbyloxide at a temperature and for a time effective for soluble components to impregnate the carrier. Suitably this may be at ambient temperature for about a half hour, but heating may be employed.

Preferably, before the solution of the dissolved magnesium dihydrocarbyloxide, magnesium chloride and transition metal hydrocarbyloxide is combined with the particulate porous inorganic oxide support, the solution is reacted with a carboxylic acid derivative, dissolved in an inert solution, and having the formula:

R⁵COZ, (Formula V)

wherein
R⁵ is a hydrocarbyl radical having from 1 to 20 carbon atoms; and
Z is a halogen atom or an alkoxy radical having from 1 to 20 carbon atoms.
R⁵ in this formula is an aliphatic, alicyclic or aromatic hydrocarbon group. Exemplary groups include methyl, ethyl, propyl, butyl, amyl, hexyl, heptyl, octyl, nonyl, decyl, cetyl, stearyl, 2-ethylhexyl, cyclopentyl, cyclohexyl, phenyl, cresyl and naphthyl. Halogen atoms include chlorine, bromine and iodine, and of these halogen atoms, chlorine is preferred. Suitable carboxylic acid derivatives are well known and can be found in U. S. Patent 5,064,798. Benzoyl chloride is a preferred carboxylic acid derivative.

The carboxylic acid derivative used is such that the molar ratio of the carboxylic acid derivative to the total of magnesium compounds and transition metal hydrocarbyloxide suitable is from 0.001 to 10, preferably from 0.01 to 3, and most preferably 0.5 to 1.

The carboxylic acid derivative is combined with the solution of magnesium dihydrocarbyloxide, magnesium chloride and transition metal hydrocarbyloxide suitably by adding the derivative to the solution. The reaction is exothermic and may be controlled by the rate of addition and applying cooling or heating.
The reaction may be allowed to occur at ambient temperature. Heating may be controlled within the range from 15° C to the boiling point of the solvent. A homogeneous solution is formed as the reaction ends. The solution containing the reaction product is then combined with the slurry of particulate porous inorganic oxide and the reaction product is permitted to impregnate the oxide, as already has been described.

To the slurry mixture of impregnated oxide support is then added the halogen-containing compound of the formula:

HₐM¹X¹ _{b}R¹ _{(c-b-a)} (Formula III)

wherein
M¹ is boron, carbon, silicon or mixtures thereof; X¹ is a halogen;
X¹ is Cl, Br or mixtures thereof;
R¹ is a hydrocarbyl or alkoxy radical having 1 to 20 carbon atoms;
"a" is zero when M¹ is boron and is a number greater than zero and less than or equal to 2 when M¹ is silicon or carbon; and
"b" is a number equal or greater than one when M¹ is boron, and greater than one when M¹ is silicon or carbon; and
"c" is the maximum valency of the element M¹. R¹ in this formula may be an aliphatic, alicyclic or aromatic hydrocarbon group. Exemplary groups include methyl, ethyl, propyl, butyl, pentyl, hexyl, heptyl, octyl, nonyl, decyl, cetyl, stearyl, 2-ethylhexyl, cyclopentyl, cyclohexyl, phenyl, cresyl and naphthyl. Halogen atoms include chlorine, bromine, iodine, and fluorine, and of these halogen atoms, chlorine is preferred. Where M¹ is carbon, the formula describes suitable compounds which include chloroform, carbon tetrachloride and other halogen-containing hydrocarbons with from 1 to 20 carbon atoms, preferably from 1 to 6 carbon atoms. Where M¹ is boron, the formula describes the boron halide compounds useful individually or in combination, including boron trichloride, boron tribromide, boron ethyldichloride, boron ethyloxide dichloride, boron diethyloxide chloride, boron hexyldichloride, boron hexyloxide dichloride, boron benzyldichloride, boron phenyldichloride, and boron diphenyloxide chloride. Boron trichloride is the preferred boron compound. where M¹ is silicon, the formula describes chlorosilane compounds useful individually or in combination, which include trichiorosilane, methyldichlorosilane, ethyldichlorosilane, n-propyldichlorosilane, iso-propyldichlorosilane, n-butyldichlorosilane, benzyldichlorosilane, parachlorobenzyldichlorosilane, toluyldichlorosilane, napthyldichlorosilane, vinyldichlorosilane, allydichlorosilane, mono-methylchlorosilane, dlethylchlorsilane, methyl isopropylchlorosilane, methylbenzylchlorosilane, and dibenzylchlorosilane. Trichlorosilane is the preferred chlorosilane compound.

The amount of halogen-containing compound used is such that the molar ratio of it to the total of magnesium compounds and transition metal hydrocarbyloxide broadly is from 100 to 0.1. Suitably, the molar ratio is from 10 to 1.0.

The reaction of the halogen-containing compound with the slurry reaction mixture is exothermic. The halogen-containing compound is added at a rate over a period of time adequate to control the reaction to completion. Suitably the reaction is permitted to occur at ambient temperature for about a half hour.

Following the reaction of the slurry mixture with the halide containing compound, there is added to the slurry reaction mixture an organometallic compound, dissolved in an inert solvent, and of the formula:

M³R⁴ _{e-f}X_{f} (Formula IV)

wherein
M³ is selected from aluminum magnesium, zinc or mixtures thereof;
R⁴ is a saturated hydrocarbyl radical having from 1 to 14 carbon atoms;
X is hydrogen, a halogen or an alkoxy radical;
"e" is the valency of the metal M³, and
"f" is a number from zero to e-1.

The organometallic compounds include organoaluminum compounds, organomagnesium compounds and organozinc compounds. Of these organometallic compounds, organoaluminum compounds are preferred. Organoaluminum compounds are known to those of skill in the art, see for example, U.S. Patent number 5,064,798.

The molar ratio of the organometallic compound to the transition metal hydrocarbyloxide Generally can be selected over a broad range, suitably from 0.1 to 10, preferably from 0.5 to 5.

The organometallic compound in an inert solvent is combined, suitably by addition, with the slurry solution resulting upon addition of the halogen-containing compound to the slurry reaction mixture. The slurry solution is mixed, suitably by stirring or other agitation, for from 0.5 to 5 hours, suitably at temperatures in the range from 15°C to the boiling point of the solvent for a period of time adequate to assure that reaction is complete. Generally, reaction is complete after one-half hour at ambient temperature.

The resultant slurry may be charged directly to the polymerization reaction zone or may be dried and stored under a dry inert gas such as nitrogen or argon for future use.

The catalyst compositions of this invention are useful in the production of homo-polymers and copolymers of C₂ to C₈ 1-olefins, and especially to prepare homo-polymers and co-polymers of ethylene.

Polymerization may be conducted by suspension, liquid or gas phase processes. Suspension polymerization may be accomplished at a temperature in the range from 50°C to 100°C, suitably 85°C, under total pressures in the range from 344.75 KPa (50 psia) to 6985 KPa (1000 psia), suitably 344.75-3447.5 KPa (50-500 psia). A polymerization medium suitably an aliphatic hydrocarbon such as hexane or heptane, is provided in a dried reactor and under an inert atmosphere.

The reactor may be charged with an organoaluminum compound cocatalyst and hydrogen to cause chain transfer and control molecular weight under conventional methodology, and if a copolymer is wanted, the desired comonomer also may be charged into the reactor. The 1-olefin is introduced, pressurizing the system to the desired level, and the catalyst is charged. The liquid phase polymerization is more suitable for the higher molecular weight 1-olefins which have higher boiling points, for example 1-butene, 1-hexene, or 1-octene, using the liquid olefin as the polymerization medium at temperatures in the range from 50°C to 300°C and pressure in the range from 689.5 KPa (100 psia) to 6895 KPa (1000 psia). Gas phase polymerization most advantageously is accomplished in a fluidized bed reactor, suitably at temperatures in the range from 50°C to 100°C at pressures from 344.75 KPa(50 psia) to 3447.5 KPa(500 psia).

Ethylene homo-polymers and copolymers prepared with the catalyst compositions of this invention may have a melt index from 0.01 dg./min. up to 100 dg./min. and a melt index ratio of from 20 to 100. The products prepared with the catalysts of this invention also are produced at a higher specific activity than previously available. Specific activity takes into account the amount of titanium that is contained per gram of catalyst. Thus, the catalyst of the present invention produces more polymer per gram of titanium per unit time than other catalysts. In other words, the catalyst productivity is normalized on a per unit of titanium per unit of time, and per unit of ethylene.

As previously mentioned, this invention provides a facile method for producing a supported magnesium-titanium complex catalyst system which exhibits a combination of desirable catalyst properties not likewise exhibited by various state of the art supported magnesium-titanium complex catalyst systems which exhibit the comonomer effect. In accordance with this invention the catalyst system is produced by liquid phase reactions with liquid reagent solutions without the need for intermediate drying or separation steps. Chief among the desirable properties exhibited is the ability of catalyst systems of this invention to polymerize the slurry or gas phase production at a high rate of catalyst productivity. The high productivity rate enhances the rate at which polymer product can be produced and eliminates the need to subject the product polymer to a deashing operation.

### Examples

The present invention is illustrated in specific detail with reference to several examples. The examples which follow compare the properties of catalysts of the present invention with those of two prior art catalyst systems, as described in U. S. Patent number 4,564,606 (especially example number 3) and U. S. Patent number 5,064,798. More particularly, the following examples illustrate a reduction in comonomer effect using catalysts of the present invention as compared to prior art catalysts.

### Catalyst Example 1

A precursor solution was prepared by loading a flask with 0.988 g of MgCl₂, 28.8 cc of magnesium 2-methylpentyloxide in heptane (0.78 mM Mg/mL, Lithium Corp.) and 5.4 cc tetrabutyltitanate. The contents of the flask were heated to 60-70° C under N₂ and with stirring until a homogeneous solution formed. Separately 4.0 g of MS948X silica (Davison Chemical) which had been dehydrated in flowing N₂ at 500° C for 6 hours was charged to a flask along with 30 mL of isopentane. Under stirring 1.90 g of the precursor solution was added. After 1 hour 1.6 mL of trichlorosilane was added followed 0.5 hr later by 3.5 mL of tri-n-hexylaluminum solution in heptane (Texas Alkyls). The slurry was residue dried at 50-55° C under a flow of N₂. A free flowing solid weighting 5.35 g was obtained.

### Catalyst Example 2

To prepare the catalyst of Example 2, the same precursor preparation as Example 1 was used. Then separately, 4.0 g of MS948X silica was combined with 30mL of isopentane and 1.90 g of the precursor. After 1 hour, 0.3 mL of benzoyl chloride was added followed after another hour with 1.6 mL of trichlorosilane and after an additional 0.5 hr by 3.5 mL of tri-n-hexylaluminum solution. The slurry was residue dried at 50-55°C under a flow of N₂. A free flowing solid weighting 5.74 g was obtained.

### Homo-polymerization based on Catalyst Examples

A two liter autoclave was heat treated at 100° C under flowing N₂ for one hour and cooled to room temperature. For homo-polymerization 800 mL of isobutane was added along with enough 25% (w/w) triethyl aluminum in heptane to give the desired Al to Ti molar ratio. The vessel was pressurized with hydrogen and then heated to the polymerization temperature. Ethylene was added to the reactor to bring the pressure up to 1825.1 KPa (250 psig). The dried catalyst of Example 2 was added and polymerization was allowed to proceed by feeding ethylene on demand. The polymerization was terminated by shutting off the ethylene flow and rapidly cooling the reactor to room temperature. The reactor was vented and the solid polymer collected. Note, polymerization with Al/Ti ratios of 100 is designated 2-1, at an Al/Ti ratio of 200, polymerization is designated 2-2 (see Table 1).

### Comparative Example (C-1) (Catalyst Preparation)

Into a vial containing 20 ml of hexane was injected 10 ml of butylethylmagnesium (BEM) (6.8 mmoles Mg). To this solution was added 0.5 ml (6.8 mmoles) of n-butanol followed by reaction at room temperature for 1.5 hours. A second vial containing 3.5 grams of silica gel (previously dried at 500°C,) and 20 ml of hexane was connected to a chlorine gas cylinder, pressurized to 153 KPa (7.5 psig) and allowed to react for one hour at room temperature. At the completion of this time period, the vial was purged with nitrogen to remove residual chlorine. The contents of the first vial were then syringed into the vial containing the chlorinated silica and allowed to react for one hour at room temperature. Six and eighttenths mmoles of benzoylchloride was added and stirring continued at room temperature for one hour. TCl₄ was added (2.3 mmoles Ti) and reacted at room temperature for one hour. The catalyst was then filtered. After washing with hexane, the catalyst was cream colored and found to contain 1.13 weight percent Ti. (Example 3, U.S. Patent number 4,564,606.)

### Comparative Example (C.2) (Catalyst Preparation)

A 4.6 mmole aliquot of magnesium di-2-methylpentyloxide in heptane solution (0.96M) and 5.9 mmole of liquid titanium tetra Isobutoxide were mixed in a vial to form a homogeneous solution. This solution was injected into a vial containing 30 cc of hexane and 3.5 grams of Davison 948 silica gel previously dried at 500°C. The resulting mixture was allowed to react at room temperature for 30 minutes. The supernatant of the mixture was decanted. A 19.7 mmole aliquot of trichlorosilane liquid was injected into the vial and the mixture was allowed to react at room temperature for 30 minutes. Finally, a 1.4 mmole aliquot of tri-n-hexylaluminum (TNHAL) in heptane solution (0.72M) was added to the mixture at room temperature and stirred for 30 minutes. The mixture turned brown after addition of TNHAL The product was dried by first purging with nitrogen followed by evaporation under vacuum. (Example 1, U. S. Patent number 5,064,798.)

### Homo-Polymerization of Comparative Example C-1

To a 2 liter autoclave were added 800 cc of hexane, 100 mg of the titanium containing catalyst component, triisobutyl aluminum co-catalyst in an amount to provide an aluminum to titanium ratio of 50 mmoles (0.65 ml with a concentration of 1.6 mmole Al/cc, total Al content 1.04 mmole). The vessel was pressured to 308.2 KPa(30 psig) with H₂, the vessel was then pressured to 1825.1 KPa (250 psig) with ethylene. The vessel was heated to 80°C and polymerization maintained for 100 minutes. The polymerization yield was 241.2 g of polyethylene per gram of catalyst per hour. The induction time, or the time the reactor was pressured with ethylene, to the time ethylene began to flow to maintain pressure was approximately 22 minutes. This induction period is indicative of the comonomer effect, that is no polymer was produced for 22 minutes. The specific activity was calculated at 62.5. The results appear in Table 1 as polymerization Example C-1-1.

### Homo-polymerizations Based on Comparative Examples C-2

Two polymerizations were carried out with the catalyst of Example C-2. The first designated C-2-1 was polymerized, just as for Comparative Example C-1, including the aluminum co-catalyst to titanium ratio of 50 (Al/Ti).

The second, designated C-2-2 in Table 1, was polymerized as in Comparative Example C-1, except that the aluminum co-catalyst to titanium ratio was doubled (Al/Ti = 100). These resuts of these two polymerizations are found in Table 1.

### Discussion of Homo-Polymerization Results

Polymerization examples 2-1 and 2-2 in Table 1 are homo-polymerizations utilizing Catalyst Example 2. These polymerizations show a 55% productivity increase upon doubling of the Al/Ti ratio between 1 and 2 without lowering of specific activity.

Comparing Example 1-1 with Comparative Example C-2-2, both utilize an Al/Ti ratio of 100, Example 1-1 produces 65% more polymer and gives a 331% increase in specific activity compared to Example C-2-2. This unexpected result is achieved by substituting MgCl₂ for part of the magnesium dihydrocarbyloxide in the catalyst formulation.

### Copolymerizations

The catalyst of my invention is useful not only in homo-polymerization of ethylene as just discussed, but in copolymerization as well.

Table 2 shows both the Comparative Catalyst C-2 and the catalysts of my invention (as described in Examples 1 and 2) used under varying conditions in ethylene-hexene co-polymerizations.

Except for one anomalous data point (polymerization number E-3) specific activity increases by a substantial measure when the catalyst of my invention is utilized compared to the Comparative Catalyst Examples. Also catalyst productivity and/or resin bulk density increases when comparing the catalyst of my invention with the comparative examples.

Polymerization series D were all run at 85°C with triethyl aluminum co-catalyst, with 0.73M/L ethylene, a hydrogen to ethylene ratio of 0.032 (H₂/C₂=) and a hexene to ethylene ratio of 0.83 (C₆/C₂=). (Examples D-1, D-2, D-3, and D-4)

Polymerization series E were all run at 85°C with triisobutyl aluminum as the co-catalyst, with 0.73 M/L C₂=, 0.032 H₂/C₂=, and 0.83 C₆/C₂)=.(Examples E-1, E-2, E-3, and E-4)

Polymerization series F were all run at 75°C with triethylaluminum co-catalyst, 0.74 M/L C₂=, 0.032 H₂/C₂=, and 0.83 C₆/C₂=.(Examples F-1, F-2, F-3, and F-4)

Polymerization series G were all run at 75°C with triisobutyl aluminum co-catalyst, 0.74 M/L C₂=, 0.032 H₂/C₂=, and 0.83 C₆/C₂=.(Exwnples G-1, G-2, and G-3)

### Conclusions Based on Polymerization Examples 1-1, 1-2. C-1-1, C-2-1, and C-2-2

Referring to Table 1 and Table 2, the Comparative Examples show two manifestations of the "comonomer effect". In Table 1, a clear comparison of the catalyst of the present invention with the Comparative Examples C-1-1, C-2-1 and C-2-2 show induction periods of 22, 12 and 9 minutes respectively, indicating that in the absence of comonomer, the reaction is slow to commence. On the other hand, the induction period for Examples 2-1 and 2-2 (examples of the present invention) are 0 minutes, indicating polymerization activity that begins substantially as soon as ethylene is charged to the reactor.

In Table 2, another clear comparison of the present invention catalysts with the comparative examples is seen. The specific activities of the catalysts of the present invention are clearly superior to the comparative catalysts. Further, in several examples, the yield is substantially improved by use of the catalysts of the present invention.

Those skilled in the art will appreciate that the present catalysts have applications and advantages beyond those expressly set forth herein. The coverage of this patent is limited only as set forth in the appended claims.

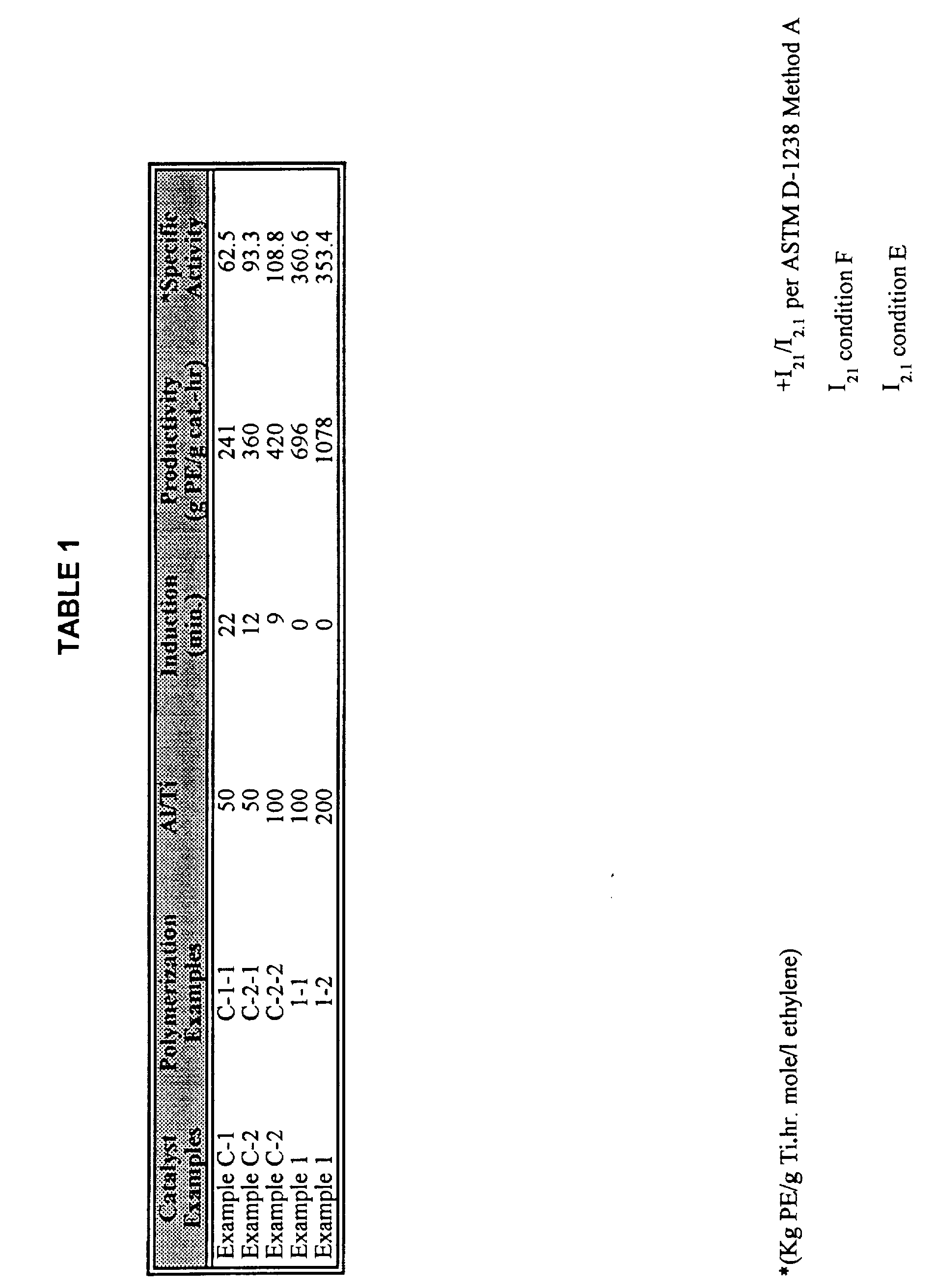

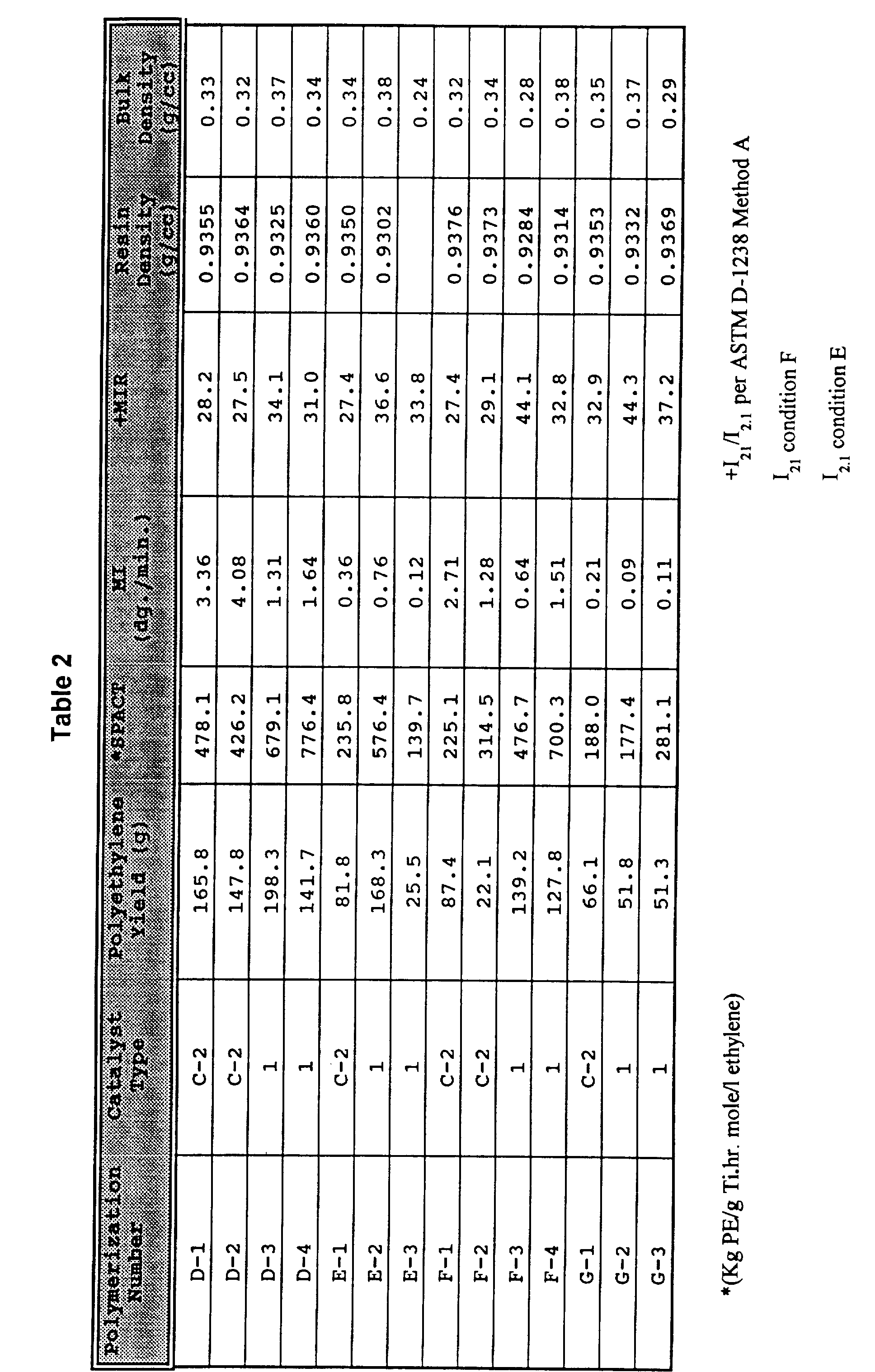

## Claims

1. A supported catalyst for polymerization of alpha-olefins, comprising a first and a second catalyst component, wherein:
I) said first catalyst component is formed by;
(A) combining an inorganic oxide support with an inert solvent to form a slurry and mixing said slurry with a solution of:
(1) at least two magnesium compounds;
and
(2) a transition metal hydrocarbyloxide having the general formula;
M²(OR³)_{y} (Formula II):
and
(B) reacting the product formed by (A) with a halogen-containing compound of the general formula:
HₐM¹X¹ _{b}R¹ _{(c-b-a)} (Formula III);
and
II) said second catalyst component being an organometal compound of the formula:
M³R⁴ _{e-f}X_{f} (Formula IV);
wherein in Formula II (M²(OR³)_{y}),
M² is a transition metal from Group IVB, VB, and VIB of the Periodic Table, preferably M² is titanium, vanadium, chromium or zirconium, more preferably M² is titanium;
"y" is the valency of the metal M²; and
R³ is the same or different, and is a hydrocarbyl radical containing 1 to 20 carbon atoms;
wherein in Formula III (HₐM¹X¹ _{b}¹R¹ _{(c-b-a}),
M¹ is boron, carbon, silicon or mixtures thereof;
X¹ is a halogen, preferably X¹ is chlorine;
R¹ is a hydrocarbyl or alkoxy radical having 1 to 20 carbon atoms, preferably R¹ is an alkyl group, more preferably R¹ is an alkyl group having from 1 to 6 carbon atoms;
"a" is zero when M¹ is boron, and is a number greater than 0, and less than or equal to 2 when M¹ is silicon or carbon; and
"b" is a number equal or greater than one when M¹ is boron, and greater than one when M¹ is silicon or carbon; and
"c" is the maximum valency of the element M¹,
wherein in Formula IV (M³R⁴ _{e-f}X_{f}),
M³ is aluminum, magnesium, zinc or mixtures thereof;
R⁴ is a saturated, hydrocarbyl radical having from 1 to 14 carbon atoms;
X is a hydrogen, halogen or an alkoxy radical;
"e" is the valency of the metal M³; and
"f" is a number from zero to e-1;
said halogen-containing compound of Formula III is reacted with the reaction mixture of (A) at a molar ratio of from 100 to 0.1 mols per mol of said magnesium compounds, and said transition metal hydrocarboxyloxide (Formula II);
said oxide support being used in an amount of from 1 to 10,000 parts by weight of the oxide to weight of transition metal hydrocarbyloxide (Formula II);
said magnesium compounds being combined with said transition metal hydrocarbyloxide (Formula II) compound at an Mg/M² molar ratio in the range of from 0.1 to 100; and
said second catalyst component is present in amounts in the range of from 0.1 to 10 mols per mol of transition metal hydrocarbyloxide (Formula II);
wherein said two magnesium components include:
(a) a first magnesium compound being a magnesium dihydrocarbyloxide of the general formula:
Mg(OR²)₂ (Formula I);
wherein R² is the same or different and is a hydrocarbyl radical containing one or more carbon atoms, preferably R² is an alkyl group, more preferably R² is an alkyl group in which the carbon number is 6 or greater; and
(b) a second magnesium compound characterized in that said second magnesium compound is magnesium chloride (MgCl₂).

2. A supported catalyst according to claim 1 wherein the solution made by combining the magnesium dihydrocarbyloxide, magnesium chloride, and the transition metal hydrocarbyloxide is additionally reacted with a carboxylic acid derivative represented by the formula:
R⁵COZ (Formula V)
said reaction with said carboxylic acid derivative being prior to mixing by contacting the porous inorganic oxide support in an inert solvent;
wherein in Formula V (R⁵COZ),
R⁵ is a hydrocarbyl radical having from 1 to 20 carbon atoms; and
Z is a halogen atom or an alkoxy group having from 1 to 20 carbon atoms; preferably wherein said carboxylic acid derivative is benzoylhalide and wherein said carboxylic acid derivative is reacted with said solution at a molar ratio in the range of from 0.001 to 10.0 mols per mol of the combination of the magnesium compounds and the transition metal hydrocarbyloxide (Formula II).

3. A supported catalyst according to claim 1 in which said dissolved magnesium dihydrocarbyloxide (Formula I) is a reaction product produced by reacting an alkyl alcohol containing at least 6 carbon atoms with a magnesium dialkyl dissolved in an inert solvent at a ratio of two mols of alkyl alcohol per mol of magnesium dialkyl.

4. A supported catalyst according to claim 1 wherein said transition metal hydrocarbyloxide compound is a titanium tetra-alkoxide and wherein said halogen-containing compound is a chlorosilane.

5. A supported catalyst according to claim 1 wherein the magnesium dihydrocarbyloxide is magnesium di-2-methylpentyloxide, and wherein the transition metal hydrocarbyloxide is titanium tetra-n-butyloxide.

6. A supported catalyst according to claim 1 wherein said porous inorganic support is a finely divided particulate selected from the group consisting of silica and silica-alumina, said inorganic support has a particle diameter in the range of from 10 to 200 microns, a pore volume in the range of 0.1 to 5.0 cm³/g, and a surface area in the range of from 10 to 1,000 m²/g.

7. A supported catalyst according to claim 1 wherein;
said halogen-containing compound of Formula III is reacted with the reaction mixture of (A) at a molar ratio of from 10 to 1 mols per mol of said combined magnesium dihydrocarbyloxide (Formula I), said magnesium chloride, and said transition metal hydrocarboxyloxide (Formula II); said oxide support being used in an amount of from 1 to 10,000 parts by weight of the oxide to weight of transition metal hydrocarbyloxide (Formula II),
said magnesium dihydrocarbyloxide (Formula I), and said magnesium chloride being combined with said transition metal hydrocarbyloxide (Formula II) compound at an Mg/M² molar ratio in the range of from 0.5 to 50; and said second catalyst component is present in amounts in the range of from 0.5 to 5 mols per mol of transition metal hydrocarbyloxide (Formula II).

8. A supported catalyst according to claim 2 wherein;
said carboxylic acid derivative is reacted with said solution at a molar ratio in the range of from 0.01 to 3.0 mols per mol of the combination of the magnesium compounds and the transition metal hydrocarbyloxide (Formula II).

9. A process for polymerizing a 1-olefin which comprises contacting the 1-olefin at a temperature in the range of from 50°C to 300°C with a catalyst according to claim 1.

10. A process for preparing a supported catalyst composition for polymerization of alpha-olefins comprising:
(A) combining a first magnesium compound and a second magnesium compound where said second magnesium compound is a magnesium dihydrocarbyloxide, in an inert solvent, said magnesium dihydrocarbyloxide having the formula:
Mg(OR²) (Formula I)
with a transition metal hydrocarbyloxide of the formula:
M²(OR³) (Formula II)
to produce a first solution;
the respective amounts of each of said first and second magnesium compounds and said transition metal hydrocarboxyloxide, being such that the mol ratio of Mg/M² in said solution is in the range of from 0.5 to 50;
(B) combining a carboxylic acid derivative, dissolved in an inert solution, and of the formula:
R⁵COZ (Formula V)
with said first solution, for a period of time effective to permit substantial completion of reaction with the carboxylic acid derivative, to produce a second solution, the amount of said carboxylic acid derivative being such that the mol ratio of the carboxylic acid derivative to said magnesium dihydrocarbyloxide is in the range of from 0.01 to 3.0;
(C) combining the solution of step (B), and said first solution with a finely divided porous inorganic oxide support in an inert solvent to produce a slurry mixture, said support being present in the range of from 1 to 10,000 parts by weight of said transition metal;
(D) combining with the slurry mixture of step (C) with a halogen-containing compound of the formula:
HₐM¹X¹ _{b}R¹ _{(c-b-a)} (Formula III)
for a period of time effective to permit substantial completion of reaction with the halogen-containing compound to produce a slurry reaction mixture; and
(E) adding to the slurry reaction mixture of step (D), an organometal compound, dissolved in an inert solvent, said organometal compound represented by the formula:
M³R⁴ _{e-f}X_{f} (Formula IV)
wherein said organometal compound is present in amounts in the range of from 0.5 to 5 mols per mol of transition metal hydrocarbyloxide (Formula II);
wherein in Formula I (Mg(OR²)₂)
R² is the same or different and is a hydrocarbyl radical containing one or more carbon atoms;
wherein in Formula II (M²(OR³)_{y})
M² is a transition metal from Group IVB, VB, and VIB of the Periodic Table;
"y" is the valency of the metal M²; and
R³ is the same or different, and is a hydrocarbyl radical containing 1 to 20 carbon atoms to produce the catalyst composition;
wherein in Formula III (HₐM¹X¹ _{b}R¹ _{(c-b-a)}
M¹ is boron, carbon, silicon or mixtures thereof; X¹ is a halogen;
X¹ is a halogen;
R¹ is a hydrocarbyl or alkoxy radical having 1 to 20 carbon atoms;
"a" is zero when M¹ is boron, and is a number greater than zero and less than or equal to two when M¹ is silicon or carbon;
"b" is a number equal or greater than one, when M¹ is boron, and greater than one when M¹ is silicon or carbon, and
"c" is the maximum valency of the element M¹ wherein in Formula IV (M³R⁴ _{e-f}X_{f});
M³ is aluminum, magnesium, zinc or mixtures thereof;
R⁴ is a saturated hydrocarbyl radical having from 1 to 14 carbon atoms;
X is hydrogen, halogen or an alkoxy radical;
"e" is the valency of the metal M³, and
"f" is a number from zero to e-1;
wherein in Formula V (R⁵COZ);
R⁵ is a hydrocarbyl radical having from 1 to 20 carbon atoms; Z is a halogen atom or an alkoxy group having from 1 to 20 carbon atoms, and characterized in that said first magnesium compound of (A) is magnesium chloride (MgCl₂).

11. A catalyst for polymerizing olefins prepared by a process comprising:
(A) dissolving Mg(OR)₂ in a hydrocarbon;
(B) adding Ti(OR)₄ to the solution of step (A);
(C) adding benzoyl chloride to the product of step (B) to form a catalyst precursor;
(D) adding an inert solid support to the precursor of step (C);
(E) adding HSiCl₃ to the product of step (D);
(F) adding Tri-n-hexylaluminum to the product of step (E); and
characterized in that MgCl₂ is added to the solution of step (A).

12. A catalyst for polymerizing olefins, said catalyst being prepared by a process comprising the steps of:
(A) dissolving magnesium di-2-methylpentyloxide in a hydrocarbon solvent;
(B) adding titanium tetra-n-butoxide to the solution of step (A);
(C) adding benzoyl chloride to the product of step (B) to form a catalyst precursor;
(D) adding to the precursor of step (C) a finely divided porous inorganic oxide, said inorganic oxide selected from the group consisting of silica and silica-alumina, wherein said oxide has a particle diameter in the range of from 10 to 200 microns, a pore volume in the range of from 0.1 to 5 cm³/gm and a surface area in the range of from 10 to 1,000 m²/gm;
(E) adding trichlorosilane to the product of step (D); and
(F) adding Tri-n-hexylaluminum to the product of step (E).
characterized in that MgCl₂ is added to the solution of Step A.

## Patentansprüche

1. Trägerkatalysator für die Polymerisation von α-Olefinen, der eine erste und eine zweite Katalysatorkomponente umfaßt, wobei
I) die erste Katalysatorkomponente gebildet wird, indem
(A) anorganischer Oxidträger mit einem inerten Lösungsmittel kombiniert wird, um eine Aufschlämmung zu bilden, und die Aufschlämmung mit einer Lösung von
(1) mindestens zwei Magnesiumverbindungen und
(2) einem Übergangsmetallkohlenwasserstoffoxid mit der allgemeinen Formel
M²(OR³)_{y} (Formel II)
gemischt wird und
(B) das in (A) gebildete Produkt mit einer halogenhaltigen Verbindung mit der allgemeinen Formel
HₐM¹X¹ _{b}R¹ _{(c-b-a)} (Formel III)
umgesetzt wird, und
II) die zweite Katalysatorkomponente eine Organometallverbindung mit der Formel
M³R⁴ _{e-f}X_{f} (Formel IV)
ist,
wobei in Formel II (M²(OR³)_{y})
M² ein Übergangsmetall aus der Gruppe IVB, VB und VIB des Periodensystems ist, vorzugsweise ist M² Titan, Vanadium, Chrom oder Zirconium, insbesondere ist M² Titan,
"y" die Wertigkeit des Metalls M² ist,
R³ gleich oder unterschiedlich und ein Kohlenwasserstoffrest ist, der 1 bis 20 Kohlenstoffatome enthält,
wobei in Formel III (HₐM¹X¹ _{b}R¹ _{(c-b-a)}
M¹ Bor, Kohlenstoff, Silicium oder Mischungen derselben ist,
X¹ Halogen ist, vorzugsweise ist X¹ Chlor,
R¹ ein Kohlenwasserstoff- oder Alkoxyrest mit 1 bis 20 Kohlenstoffatomen ist, vorzugsweise ist R¹ eine Alkylgruppe, insbesondere ist R¹ eine Alkylgruppe mit 1 bis 6 Kohlenstoffatomen,
"a" Null ist, wenn M¹ Bor ist, und eine Zahl größer als 0 und weniger als oder gleich 2 ist, wenn M¹ Silicium oder Kohlenstoff ist, und
"b" eine Zahl gleich oder größer als eins ist, wenn M¹ Bor ist, und größer als eins ist, wenn M¹ Silicium oder Kohlenstoff ist, und
"c" die maximale Wertigkeit des Elements M¹ ist,
wobei in Formel IV (M³R⁴ _{e-f}X_{f})
M³ Aluminium, Magnesium, Zink oder Mischungen derselben ist,
R⁴ ein gesättigter Kohlenwasserstoffrest mit 1 bis 14 Kohlenstoffatomen ist,
X Wasserstoff, Halogen oder ein Alkoxyrest ist,
"e" die Wertigkeit des Metalls M³ ist und
"f" eine Zahl von null bis e-1 ist,
wobei die halogenhaltigen Verbindung mit der Formel III mit der Reaktionsmischung von (A) in einem Molverhältnis von 100 bis 0,1 Mol je Mol der Magnesiumverbindungen und des Übergangsmetallkohlenwasserstoffoxids (Formel II) umgesetzt wird,
der Oxidträger in einer Menge von 1 bis 10 000 Gewichtsteilen Oxid je Gewicht Übergangsmetallkohlenwasserstoffoxid (Formel II) verwendet wird,
die Magnesiumverbindungen mit der Übergangsmetallkohlenwasserstoffoxidverbindung (Formel II) in einem Mg/M²-Molverhältnis im Bereich von 0,1 bis 100 kombiniert werden und
die zweite Katalysatorkomponente in Mengen im Bereich von 0,1 bis 10 Mol je Mol Übergangsmetallkohlenwasserstoffoxid (Formel II) vorhanden ist,
wobei die beiden Magnesiumkomponenten
(a) eine erste Magnesiumverbindung, die Magnesiumdikohlenwasserstoffoxid mit der allgemeinen Formel
Mg(OR²)2 (Formel I)
ist, wobei R² gleich oder unterschiedlich ist und ein Kohlenwasserstoffrest ist, der ein oder mehrere Kohlenstoffatome enthält, vorzugsweise ist R² eine Alkylgruppe, insbesondere ist R² eine Alkylgruppe, in der die Anzahl der Kohlenstoffatome 6 oder größer ist, und
(b) eine zweite Magnesiumverbindung einschließt, die dadurch gekennzeichnet ist, daß die zweite Magnesiumverbindung Magnesiumchlorid (MgCl₂) ist.

2. Trägerkatalysator nach Anspruch 1, bei dem die Lösung, die durch Kombinieren des Magnesiumdikohlenwasserstoffoxids, Magnesiumchlorids und des Übergangsmetallkohlenwasserstoffoxids hergestellt worden ist, zusätzlich mit einem Carbonsäurederivat mit der Formel
R⁵COZ (Formel V)
umgesetzt wird, wobei die Reaktion mit dem Carbonsäurederivat vor dem Mischen durch Kontaktieren des porösen anorganischen Oxidträgers in einem inerten Lösungsmittel erfolgt, wobei in Formel V (R⁵COZ)
R⁵ ein Kohlenwasserstoffrest mit 1 bis 20 Kohlenstoffatomen ist und
Z ein Halogenatom oder eine Alkoxygruppe mit 1 bis 20 Kohlenstoffatomen ist, wobei vorzugsweise das Carbonsäurederivat Benzoylhalogenid ist und wobei das Carbonsäurederivat mit der Lösung in einem Molverhältnis im Bereich von 0,001 bis 10,0 Mol je Mol der Kombination der Magnesiumverbindungen und des Übergangsmetallkohlenwasserstoffoxids (Formel II) umgesetzt wird.

3. Trägerkatalysator nach Anspruch 1, bei dem das aufgelöste Magnesiumdikohlenwasserstoffoxid (Formel I) ein Reaktionsprodukt ist, das durch Umsetzung von Alkylalkohol mit mindestens 6 Kohlenstoffatomen mit einem in einem inerten Lösungsmittel aufgelösten Magnesiumdialkyl in einem Verhältnis von zwei Mol Alkylalkohol je Mol Magnesiumdialkyl hergestellt ist.

4. Trägerkatalysator nach Anspruch 1, bei dem die Übergangsmetallkohlenwasserstoffoxidverbindung ein Titantetraalkoxid ist und die halogenhaltige Verbindung ein Chlorsilan ist.

5. Trägerkatalysator nach Anspruch 1, bei dem das Magnesiumdikohlenwasserstoffoxid Magnesiumdi-2-methylpentyloxid ist und das Übergangsmetallkohlenwasserstoffoxid Titantetra-n-butyloxid ist.

6. Trägerkatalysator nach Anspruch 1, bei dem der poröse anorganische Träger ein feinteiliger Feststoff ausgewählt aus der Gruppe bestehend aus Siliciumdioxid und Siliciumdioxid-Aluminiumoxid ist, wobei der anorganische Träger einen Teilchendurchmesser im Bereich von 10 bis 200 µm, ein Porenvolumen im Bereich von 0,1 bis 5,0 cm³/g und eine Oberfläche im Bereich von 10 bis 1 000 m²/g hat.

7. Trägerkatalysator nach Anspruch 1, bei dem die halogenhaltige Verbindung mit der Formel III mit der Reaktionsmischung von (A) in einem Molverhältnis von 10 bis 1 Mol je Mol des kombinierten Magnesiumdikohlenwasserstoffoxids (Formel I), des Magnesiumchlorids und des Übergangsmetallkohlenwasserstoffoxids (Formel II) umgesetzt wird, wobei der Oxidträger in einer Menge von 1 bis 10 000 Gewichtsteilen des Oxids zu Gewicht des Übergangsmetallkohlenwasserstoffoxids (Formel II) verwendet wird, das Magnesiumdikohlenwasserstoffoxid (Formel I) und das Magnesiumchlorid mit dem Übergangsmetallkohlenwasserstoffoxid (Formel II) in einem Mg/M²-Molverhältnis im Bereich von 0,5 bis 50 kombiniert werden und die zweite Katalysatorkomponente in Mengen im Bereich von 0,5 bis 5 Mol je Mol Übergangsmetallkohlenwasserstoffoxid (Formel II) vorhanden ist.

8. Trägerkatalysator nach Anspruch 2, bei dem das Carbonsäurederivat mit der Lösung in einem Molverhältnis im Bereich von 0,01 bis 3,0 Mol je Mol der Kombination von Magnesiumverbindungen und des Übergangsmetallkohlenwasserstoffoxids (Formel II) umgesetzt wird.

9. Verfahren zum Polymerisieren von 1-Olefin, bei dem das 1-Olefin bei einer Temperatur im Bereich von 50°C bis 300°C mit einem Katalysator gemäß Anspruch 1 kontaktiert wird.

10. Verfahren zur Herstellung einer Trägerkatalysatorzusammensetzung zur Polymerisation von α-Olefinen, bei dem
(A) eine erste Magnesiumverbindung und eine zweite Magnesiumverbindung, wobei die zweite Magnesiumverbindung ein Magnesiumdikohlenwasserstoffoxid ist, wobei das Magnesiumdikohlenwasserstoffoxid die Formel
Mg(OR²)₂ (Formel I)
hat, mit einem Übergangsmetallkohlenwasserstoffoxid mit der Formel
M²(OR³) (Formel II)
in einem inerten Lösungsmittel kombiniert werden, um eine erste Lösung herzustellen, wobei die jeweiligen Mengen von jeder der ersten und zweiten Magnesiumverbindungen und des Übergangsmetallkohlenwasserstoffoxids so sind, daß das Molverhältnis von Mg/M² in der Lösung im Bereich von 0,5 bis 50 liegt,
(B) ein Carbonsäurederivat, das in einer inerten Lösung aufgelöst ist und die Formel
R⁵COZ (Formel V)
hat, mit der ersten Lösung für einen Zeitraum kombiniert wird, der effektiv ist, um die wesentliche Vollendung der Umsetzung mit dem Carbonsäurederivat zu ermöglichen, um eine zweite Lösung zu erzeugen, wobei die Menge an Carbonsäurederivat so ist, daß das Molverhältnis des Carbonsäurederivats zu dem Magnesiumdikohlenwasserstoffoxid im Bereich von 0,01 bis 3,0 liegt,
(C) die Lösung aus Stufe (B) und die erste Lösung mit feinteiligem porösen anorganischen Oxidträger in einem inerten Lösungsmittel kombiniert werden, um eine Aufschlämmungsmischung herzustellen, wobei der Träger im Bereich von 1 bis 10 000 Gewichtsteilen des Übergangsmetalls vorhanden ist,
(D) die Aufschlämmungsmischung aus Stufe (C) mit einer halogenhaltigen Verbindung mit der Formel
HₐM¹X¹ _{b}R¹ _{(c-b-a)} (Formel III)
für einen Zeitraum kombiniert wird, der effektiv ist, um die wesentliche Vollendung der Reaktion mit der halogenhaltigen Verbindung zu ermöglichen, um eine Aufschlämmungsreaktionsmischung herzustellen, und
(E) der Aufschlämmungsreaktionsmischung aus Stufe (D) eine Organometallverbindung, die in einem inerten Lösungsmittel aufgelöst ist, zugegeben wird, wobei die Organometallverbindung durch die Formel
M³R⁴ _{e-f}X_{f} (Formel IV)
wiedergegeben wird, wobei die Organometallverbindung in Mengen im Bereich von 0,5 bis 5 Mol je Mol Übergangsmetallkohlenwasserstoffoxid (Formel II) vorhanden ist,
wobei in Formel I (Mg(OR²)₂)
R² gleich oder verschieden ist und ein Kohlenwasserstoffrest mit einem oder mehreren Kohlenstoffatomen ist,
wobei in Formel II (M²(OR³)_{y})
M² ein Übergangsmetall aus der Gruppe IVB, VB und VIB des Periodensystens ist,
"y" die Wertigkeit des Metalls M² ist,
R³ gleich oder unterschiedlich und ein Kohlenwasserstoffrest ist, der 1 bis 20 Kohlenstoffatome enthält, um die Katalysatorzusammensetzung herzustellen,
wobei in Formel III (HₐM¹X¹ _{b}R¹ _{(c-b-a)})
M¹ Bor, Kohlenstoff, Silicium oder Mischungen derselben ist,
X¹ Halogen ist,
R¹ ein Kohlenwasserstoff- oder Alkoxyrest mit 1 bis 20 Kohlenstoffatomen ist,
"a" Null ist, wenn M¹ Bor ist, und eine Zahl größer als Null und weniger als oder gleich zwei ist, wenn M¹ Silicium oder Kohlenstoff ist, und "b" eine Zahl gleich oder größer als eins ist, wenn M¹
Bor ist, und größer als eins ist, wenn M¹ Silicium oder Kohlenstoff ist, und
"c" die maximale Wertigkeit des Elements M¹ ist,
wobei in Formel IV (M³R⁴ _{e-f}X_{f})
M³ Aluminium, Magnesium, Zink oder Mischungen derselben ist,
R⁴ ein gesättigter Kohlenwasserstoffrest mit 1 bis 14 Kohlenstoffatomen ist,
X Wasserstoff, Halogen oder ein Alkoxyrest ist,
"e" die Wertigkeit des Metalls M³ ist und
"f" eine Zahl von null bis e-1 ist,
wobei in Formel V (R⁵COZ)
R⁵ ein Kohlenwasserstoffrest mit 1 bis 20 Kohlenstoffatomen ist,
Z ein Halogenatom oder eine Alkoxygruppe mit 1 bis 20 Kohlenstoffatomen ist,
dadurch gekennzeichnet, daß die erste Magnesiumverbindung von (A) Magnesiumchlorid (MgCl₂) ist.

11. Katalysator zum Polymerisieren von Olefinen, der nach einem Verfahren hergestellt ist, bei dem
(A) Mg(OR)₂ in einem Kohlenwasserstoff aufgelöst wird,
(B) Ti(OR)₄ zu der Lösung aus Stufe (A) gegeben wird,
(C) Benzoylchlorid zu dem Produkt aus Stufe (B) gegeben wird, um einen Katalysatorvorläufer zu bilden,
(D) inerter Feststoffträger zu dem Vorläufer aus Stufe (C) gegeben wird,
(E) HSiCl₃ zu dem Produkt aus Stufe (D) gegeben wird,
(F) Tri-n-hexylaluminium zu dem Produkt aus Stufe (E) gegeben wird, dadurch gekennzeichnet, daß MgCl₂ zu der Lösung aus Stufe (A) gegeben wird.

12. Katalysator zum Polymerisieren von Olefinen, wobei der Katalysator nach einem Verfahren hergestellt ist, bei dem in Stufen
(A) Magnesiumdi-2-methylpentyloxid in einem Kohlenwasserstofflösungsmittel aufgelöst wird,
(B) Titantetra-n-butoxid zu der Lösung aus Stufe (A) gegeben wird,
(C) Benzoylchlorid zu dem Produkt aus Stufe (B) gegeben wird, um einen Katalysatorvorläufer zu bilden,
(D) feinteiliges poröses anorganisches Oxid, wobei das anorganische Oxid ausgewählt ist aus der Gruppe bestehend aus Siliciumdioxid und Siliciumdioxid-Aluminiumoxid, wobei das Oxid einen Teilchendurchmesser im Bereich von 10 bis 200 µm, ein Porenvolumen im Bereich von 0,1 bis 5 cm³/g und eine Oberfläche im Bereich von 10 bis 1000 m²/g hat, zu dem Vorläufer aus Stufe (C) gegeben wird,
(E) Trichlorsilan zu dem Produkt aus Stufe (D) gegeben wird,
(F) Tri-n-hexylaluminium zu dem Produkt aus Stufe (E) gegeben wird, dadurch gekennzeichnet, daß MgCl₂ zu der Lösung aus Stufe (A) gegeben wird.

## Revendications

1. Catalyseur fixé sur un support, pour la polymérisation d'alpha-oléfines, comprenant des premier et second constituants de catalyseur, dans lequel :
I) ledit premier constituant de catalyseur est formé :
(A) en associant un support consistant en un oxyde inorganique avec un solvant inerte pour former une suspension et en mélangeant ladite suspension avec une solution :
(1) d'au moins deux composés de magnésium ; et
(2) d'un hydrocarbyloxyde de métal de transition répondant à la formule générale :
M²(OR³)_{y} (Formule II) ;
et
(B) en faisant réagir le produit formé dans l'étape (A) avec un composé halogéné de formule générale :
HₐM¹X¹ _{b}R¹ _{(c-b-a)} (Formule III) ;
et
II) ledit second constituant de catalyseur est un composé organométallique de formule :
M³R⁴ _{e-f}X_{f} (Formule IV) ;
dans lequel, dans la formule Il (M²(OR³)_{y}),
M² représente un métal de transition des Groupes IVB, VB et VIB du Tableau Périodique, M² représente avantageusement le titane, le vanadium, le chrome ou le zirconium, de préférence le titane ;
"y" représente la valence du métal M²; et
les groupes R³ sont identiques ou différents et représentent chacun un radical hydrocarboné contenant 1 à 20 atomes de carbone ;
dans lequel, dans la formule III (HₐM¹X¹ _{b}¹R¹ _{(c-b-a)}),
M¹ représente le bore, le carbone, le silicium ou leurs mélanges ;
X¹ représente un halogène, de préférence le chlore ;
R¹ représente un radical hydrocarbyle ou alkoxy ayant 1 à 20 atomes de carbone ; avantageusement, R¹ représente un groupe alkyle ; de préférence, R¹ représente un groupe alkyle ayant 1 à 6 atomes de carbone ;
"a" est égal à zéro lorsque M¹ représente le bore et représente un nombre supérieur à 0 et inférieur ou égal à 2 lorsque M¹ représente le silicium ou le carbone ; et
"b" est un nombre égal ou supérieur à 1 lorsque M¹ représente le bore et supérieur à 1 lorsque M¹ représente le silicium ou le carbone ; et
"c" représente la valence maximale de l'élément M¹,
dans lequel, dans la formule IV (M³R⁴ _{e-f}X_{f}),
M³ représente l'aluminium, le magnésium, le zinc ou un de leurs mélanges ;
R⁴ représente un radical hydrocarbyle saturé ayant 1 à 14 atomes de carbone ;
X représente l'hydrogène, un halogène ou un radical alkoxy ;
"e" représente la valence du métal M³; et
"f" représente un nombre de zéro à e-1 ;
ledit composé halogéné de formule III est amené à réagir avec le mélange réactionnel de (A) en un rapport molaire de 100 à 0,1 moles par mole desdits composés de magnésium, et ledit hydrocarbyloxyde de métal de transition (formule II) ;
ledit support consistant en un oxyde étant utilisé en une quantité de 1 à 10 000 parties en poids d'oxyde par rapport au poids d'hydrocarbyloxyde de métal de transition (formule II) ;
lesdits composés de magnésium étant associés avec ledit hydrocarbyloxyde de métal de transition (formule II) en un rapport molaire Mg/M² compris dans l'intervalle de 0,1 à 100 ; et
ledit second constituant de catalyseur est présent en des quantités comprises dans l'intervalle de 0,1 à 10 moles par mole d'hydrocarbyloxyde de métal de transition (formule II) ;
dans lequel les deux constituants de magnésium comprennent :
(a) un premier composé de magnésium consistant en un dihydrocarbyloxyde de magnésium de formule générale :
Mg(OR²)₂ (Formule I) ;
dans laquelle les groupes R² sont identiques ou différents et représentent chacun un radical hydrocarbyle contenant un ou plusieurs atomes de carbone ; avantageusement, R² représente un groupe alkyle ; de préférence, R² représente un groupe alkyle ayant un nombre d'atomes de carbone égal ou supérieur à 6 ; et
(b) un second composé de magnésium, caractérisé en ce qu'il consiste en chlorure de magnésium (MgCl₂).

2. Catalyseur fixé sur un support suivant la revendication 1, dans lequel la solution préparée en associant le dihydrocarbyloxyde de magnésium, le chlorure de magnésium et l'hydrocarbyloxyde de métal de transition est amenée en outre à réagir avec un dérivé d'acide carboxylique représenté par la formule :
R⁵COZ (Formule V)
ladite réaction avec ledit dérivé d'acide carboxylique étant effectuée avant le mélange par mise en contact du support consistant en un oxyde inorganique poreux dans un solvant inerte ;
dans lequel, dans la formule V (R⁵COZ),
R⁵ représente un radical hydrocarbyle ayant 1 à 20 atomes de carbone ; et
Z représente un atome d'halogène ou un groupe alkoxy ayant 1 à 20 atomes de carbone ;
de préférence dans lequel ledit dérivé d'acide carboxylique consiste en un halogénure de benzoyle et ledit dérivé d'acide carboxylique est amené à réagir avec ladite solution d'un rapport molaire compris dans l'intervalle de 0,001 à 10,0 moles par mole de l'association des composés de magnésium et de l'hydrocarbyloxyde de métal de transition (formule II).

3. Catalyseur fixé sur un support suivant la revendication 1, dans lequel le dihydrocarbyloxyde de magnésium (formule I) dissous est un produit de réaction préparé en faisant réagir un alcool alkylique contenant au moins 6 atomes de carbone avec un dialkylmagnésium dissous dans un solvant inerte en un rapport de deux moles d'alcool alkylique par mole de dialkylmagnésium.

4. Catalyseur fixé sur un support suivant la revendication 1, dans lequel l'hydrocarbyloxyde de métal de transition est un tétra-alcoolate de titane et le composé halogéné est un chlorosilane.

5. Catalyseur fixé sur un support suivant la revendication 1, dans lequel le dihydrocarbyloxyde de magnésium consiste en di-2-méthylpentyloxyde de magnésium, et l'hydrocarbyloxyde de métal de transition consiste en tétra-n-butyloxyde de titane.

6. Catalyseur fixé sur un support suivant la revendication 1, dans lequel le support inorganique poreux consiste en particules finement divisées choisies dans le groupe consistant en silice et silice-alumine, ledit support inorganique ayant un diamètre des particules compris dans l'intervalle de 10 à 200 micromètres, un volume des pores compris dans l'intervalle de 0,1 à 5,0 cm³/g et une surface spécifique comprise dans l'intervalle de 10 à 1000 m²/g.

7. Catalyseur fixé sur un support suivant la revendication 1, dans lequel :
le composé halogéné de formule III est amené à réagir avec le mélange réactionnel de (A) en un rapport molaire de 10 à 1 moles par mole de ladite association d'hydrocarbyloxyde de magnésium (formule I), de chlorure de magnésium et d'hydrocarbyloxyde de métal de transition (formule II) ;
ledit support consistant en un oxyde étant utilisé en une quantité de 1 à 10 000 parties en poids d'oxyde sur la base du poids de l'hydrocarbyloxyde de métal de transition (formule II),
ledit dihydrocarbyloxyde de magnésium (formule I) et ledit chlorure de magnésium étant associés avec ledit hydrocarbyloxyde de métal de transition (formule Il) en un rapport molaire Mg/M² compris dans l'intervalle de 0,5 à 50 ; et
ledit second constituant de catalyseur étant présent en des quantités comprises dans l'intervalle de 0,5 à 5 moles par mole d'hydrocarbyloxyde de métal de transition (formule II).

8. Catalyseur fixé sur un support suivant la revendication 2, dans lequel :
le dérivé d'acide carboxylique est amené à réagir avec la solution en un rapport molaire compris dans l'intervalle de 0,01 à 3,0 moles par mole de l'association des composés de magnésium et de l'hydrocarbyloxyde de métal de transition (formule II).

9. Procédé pour la polymérisation d'une 1-oléfine, qui comprend la mise en contact de la 1-oléfine à une température comprise dans l'intervalle de 50°C à 300°C avec un catalyseur suivant la revendication 1.

10. Procédé pour la préparation d'une composition de catalyseur fixé sur un support pour la polymérisation d'alpha-oléfines, comprenant :
(A) l'association d'un premier composé de magnésium et d'un second composé de magnésium, ledit second composé de magnésium étant un dihydrocarbyloxyde de magnésium, dans un solvant inerte, ledit dihydrocarbyloxyde de magnésium répondant à la formule :
Mg(OR²) (Formule I)
avec un hydrocarbyloxyde de métal de transition de formule :
M²(OR³) (Formule II)
pour produire une première solution ;
les quantités respectives des premier et second composés de magnésium et de l'hydrocarbyloxyde de métal de transition étant telles que le rapport molaire Mg/M² dans ladite solution soit compris dans l'intervalle de 0,5 à 50 ;
(B) l'association d'un dérivé d'acide carboxylique, dissous dans un solvant inerte, qui répond à la formule :
R⁵COZ (Formule V)
avec ladite première solution, pendant un temps efficace pour permettre à la réaction de parvenir pratiquement à son terme avec le dérivé d'acide carboxylique, pour produire une seconde solution, la quantité dudit dérivé d'acide carboxylique étant telle que le rapport molaire du dérivé d'acide carboxylique audit hydrocarbyloxyde de magnésium soit compris dans l'intervalle de 0,01 à 3,0 ;
(C) l'association de la solution de l'étape (B) et de la première solution avec un support consistant en un oxyde organique poreux finement divisé dans un solvant inerte pour produire un mélange en suspension, ledit support étant présent en une quantité comprise dans l'intervalle de 1 à 10 000 parties en poids dudit métal de transition ;
(D) l'association au mélange en suspension de l'étape (C) d'un composé halogéné de formule :
HₐM¹X¹ _{b}R¹ _{(c-b-a)} (Formule III)
pendant un temps efficace pour permettre à la réaction de parvenir pratiquement à son terme avec le composé halogéné pour produire un mélange réactionnel en suspension ; et
(E) l'addition au mélange réaction en suspension de l'étape (D) d'un composé organométallique, dissous dans un solvant inerte, ledit composé organométallique étant représenté par la formule :
M³R⁴ _{e-f}X_{f} (Formule IV)
ledit composé organométallique étant présent en des quantités comprises dans l'intervalle de 0,5 à 5 moles par mole d'hydrocarbyloxyde de métal de transition (formule II) ;
dans lequel, dans la formule I (Mg(OR²)₂)
les groupes R² sont identiques ou différents et représentent chacun un radical hydrocarbyle contenant 1 à plusieurs atomes de carbone ;
dans lequel, dans la formule II (M²(OR³)_{y})
M² représente un métal de transition des Groupes IV, VB et VIB du Tableau Périodique ;
"y" représente la valence du métal M²; et
les groupes R³ sont identiques ou différents et représentent chacun un radical hydrocarbyle contenant 1 à 20 atomes de carbone pour produire la composition de catalyseur ;
dans lequel, dans la formule III
(HₐM¹X¹ _{b}R¹ _{(c-b-a)})
M¹ représente le bore, le carbone, le silicium ou un de leurs mélanges ;
X¹ représente un halogène ;
R¹ représente un radical hydrocarbyle ou alkoxy ayant 1 à 20 atomes de carbone ;
"a" est égal à zéro lorsque M¹ représente le bore et représente un nombre supérieur à zéro et inférieur ou égal à deux lorsque M¹ représente le silicium ou le carbone ;
"b" représente un nombre égal ou supérieur à 1, lorsque M¹ représente le bore, et supérieur à 1 lorsque M¹ représente le silicium ou le carbone ; et
"c" représente la valence maximale de l'élément M¹
dans lequel, dans la formule IV (M³R⁴ _{e-f}X_{f}) ;
M³ représente l'aluminium, le magnésium, le zinc ou un de leurs mélanges ;
R⁴ représente un radical hydrocarbyle saturé ayant 1 à 14 atomes de carbone ;
X représente l'hydrogène, un halogène ou un radical alkoxy ;
"e" représente la valence du métal M³, et
"f" représente un nombre de zéro à e-1 ;
dans lequel, dans la formule V (R⁵COZ) ;
R⁵ représente un radical hydrocarbyle ayant 1 à 20 atomes de carbone ; Z représente un atome d'halogène ou un groupe alkoxy ayant 1 à 20 atomes de carbone, caractérisé en ce que ledit premier composé de magnésium de (A) est le chlorure de magnésium (MgCl₂).

11. Catalyseur pour la polymérisation d'oléfines, préparé par un procédé contenant les étapes consistant :
(A) à dissoudre du Mg(OR)₂ dans un hydrocarbure ;
(B) à ajouter du Ti(OR)₄ à la solution de l'étape (A) ;
(C) à ajouter du chlorure de benzoyle au produit de l'étape (B) pour former un précurseur de catalyseur ;
(D) à ajouter un support solide inerte au précurseur de l'étape (C) ;
(E) à ajouter du HSiCl₃ au produit de l'étape (D) ;
(F) à ajouter du tri-n-hexylaluminium au produit de l'étape (E) ;
caractérisé en ce que du MgCl₂ est ajouté à la solution de l'étape (A).

12. Catalyseur pour la polymérisation d'oléfines, ledit catalyseur étant préparé par un procédé comprenant les étapes consistant :
(A) à dissoudre du di-2-méthylpentyloxyde de magnésium dans un solvant hydrocarboné ;
(B) à ajouter du tétra-n-butylate de titane à la solution de l'étape (B) ;
(C) à ajouter du chlorure de benzoyle au produit de l'étape (C) pour former un précurseur de catalyseur ;
(D) à ajouter au précurseur de l'étape (D) un oxyde inorganique poreux finement divisé, ledit oxyde inorganique étant choisi dans le groupe consistant en la silice et la silice-alumine, cet oxyde ayant un diamètre de particules compris dans l'intervalle de 10 à 200 micromètres, un volume des pores compris dans l'intervalle de 0,1 à 5 cm³/g et une surface spécifique comprise dans l'intervalle de 10 à 1000 m²/g ;
(E) à ajouter du trichlorosilane au produit de l'étape (E) ; et
(F) à ajouter du tri-n-hexylaluminium au produit de l'étape (F) ;
caractérisé en ce que MgCl₂ est ajouté à la solution de l'étape A.
